(19) Europäisches Patentamt
European Patent Office
Office européen des brevets

(11) EP 2 337 823 B1

(12) # FASCICULE DE BREVET EUROPEEN

(45) Date de publication et mention de la délivrance du brevet:
**21.12.2016 Bulletin 2016/51**

(21) Numéro de dépôt: **09755995.9**

(22) Date de dépôt: **08.10.2009**

(51) Int Cl.:
***C09D 4/00*** $^{(2006.01)}$ ***C09D 123/22*** $^{(2006.01)}$

(86) Numéro de dépôt international:
**PCT/FR2009/051924**

(87) Numéro de publication internationale:
**WO 2010/043800 (22.04.2010 Gazette 2010/16)**

(54) **COMPOSITIONS ANTISALISSURES PHOTORETICULABLES, FILMS OBTENUS A PARTIR DE CES COMPOSITIONS ET UTILISATIONS CORRESPONDANTES**

PHOTOVERNETZBARE ANTIFOULING-MASSEN, DARAUS ERHALTENE FILME UND ENTSPRECHENDE VERWENDUNGEN

PHOTO-CROSSLINKABLE ANTIFOULING COMPOSITIONS, FILMS OBTAINED FROM SAID COMPOSITIONS, AND CORRESPONDING USES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **14.10.2008 FR 0805680**

(43) Date de publication de la demande:
**29.06.2011 Bulletin 2011/26**

(73) Titulaires:
- **Centre National de la Recherche Scientifique (C.N.R.S.)
75794 Paris Cedex 16 (FR)**
- **Université du Maine
72085 Le Mans Cedex 9 (FR)**

(72) Inventeurs:
- **BUNEL, Claude
F-76000 Rouen (FR)**
- **CAMPISTRON, Irène
F-72000 Le Mans (FR)**
- **HELLIO, Claire
F-29900 Concarneau (FR)**
- **JELLALI, Rachid
F-72100 Le Mans (FR)**
- **LAGUERRE, Albert
F-72000 Le Mans (FR)**
- **MOUGET, Jean-Luc
F-72000 Le Mans (FR)**
- **PILARD, Jean-François
F-35320 Pance (FR)**

(74) Mandataire: **Icosa
83 avenue Denfert-Rochereau
75014 Paris (FR)**

(56) Documents cités:
**EP-A- 1 127 925**
**US-A- 4 977 220**
**US-A- 5 171 760**
**US-A- 5 576 388**
**US-A- 5 948 863**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 337 823 B1

Printed by Jouve, 75001 PARIS (FR)

## Description

La présente invention concerne des compositions antisalissures et plus particulièrement antibactériennes, antifongiques et antialgues, photoréticulables, les films obtenus à partir de ces compositions ainsi que l'utilisation de ces films notamment pour la protection antifouling de surfaces immergées en milieu d'eau douce et en milieu marin.

Le phénomène de fouling correspond à la colonisation spontanée et à l'accumulation de microorganismes, d'algues et d'animaux sur des surfaces immergées pendant une durée variable en milieu d'eau douce ou d'eau de mer. Le fouling constitue une nuisance importante, en particulier pour les navires, car en détériorant la surface des coques, il conduit à une augmentation des coûts d'entretien et offre une résistance à l'avancement du navire induisant une surconsommation de carburant et une diminution de la vitesse.

Pour lutter contre ce phénomène, des peintures incorporant du tributylétain, biocide très efficace, ont été utilisées depuis plusieurs années. Malheureusement, cette molécule et ses produits de dégradation, relargués dans le milieu marin, affectent gravement les écosystèmes, ce qui a entraîné leur interdiction totale à partir de 2008. En outre ces résidus, dont l'étain, persistent dans les sédiments des ports et des sites d'immersion des boues de dragage.

En remplacement du tributylétain, un certain nombre de produits a priori moins toxiques ont été utilisés : il s'agit pour la plupart de molécules biocides de faible masse molaire telles que des molécules halogénées, par exemple des dérivés chlorés (commercialisés sous les noms : Seanine 211, Kathon 5287, Dichlofluanid, Daconil, Thiodan, Diuron), des dérivés à base de métaux comme le zinc ou le cuivre (Zinc pyrithione, Ziram, DIthane) ou des dérivés hétérocycliques azotés (Irgarol 1051) qui sont incorporés dans la matrice du revêtement.

Ces molécules sont cependant peu à peu libérées dans le milieu aquatique, conduisant ainsi par accumulation à une certaine toxicité pour l'environnement. Le programme européen REACH encourage l'abandon de l'ajout de tout produit organique (de type herbicide ou pesticide tels que les dérivés décrits ci-dessus) dans les formulations de peintures antifouling. En outre, des peintures à base de Silicone ont été développées, démontrant certes une efficacité dans le domaine de l'antifouling, mais d'application limitée, principalement en raison de leur coût de fabrication élevé.

US 5 171 760 A, US 5 948 863 A, US 4 977 220 A et US 5 576 388 A décrivent des compositions à base de différents polymères téléchéliques.

Un but de la présente invention est de proposer des molécules qui ne soient pas des additifs, mais des constituants mêmes du revêtement antifouling.

Plus récemment des polymères de type polyuréthane à activité biocide ont été mis au point. Cependant, ces polymères sont obtenus par réaction des oligoisoprènes hydroxy téléchéliques avec des isocyanates. Outre la toxicité reconnue de ces derniers, la réaction de polymérisation nécessite l'addition de catalyseurs stanniques, prohibés pour des applications antifouling. Enfin, la mise en oeuvre est plus délicate et de ce fait présente un inconvénient majeur pour une utilisation industrielle.

Un autre but de la présente invention est de mettre au point des précurseurs de polymères n'exigeant pas de réaction complexe pour fabriquer le revêtement polymère, de mise en oeuvre simple et rapide, pouvant être effectuée sur site.

Les inventeurs ont découvert que des films polymères à propriétés antisalissures (antifouling) pouvaient être préparés à partir de compositions photoréticulables à base de certains oligoisoprènes téléchéliques.

A cet effet la présente invention propose une composition antisalissures, selon les revendications 1 à 5 et notamment antibactérienne, antifongique et/ou antialgue, photoréticulable caractérisée en ce qu'elle comprend l'association d'au moins un oligoisoprène téléchélique de formule générale (I) :

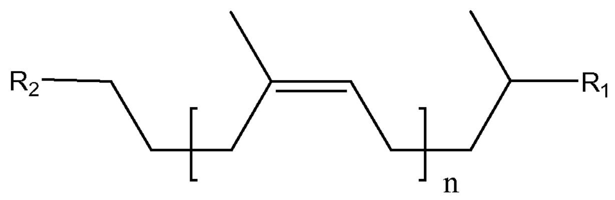

formule (I)

ou un tel oligoisoprène (I) partiellement hydrogéné, de formule (II) :

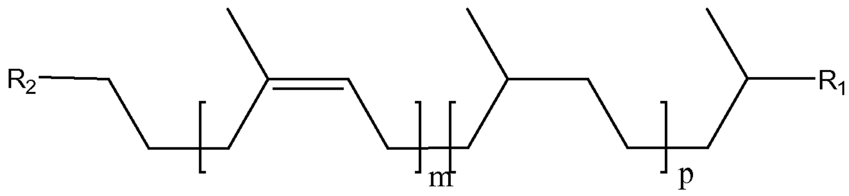

formule (II)

ou d'un composé de formule (I) partiellement époxydé, de formule (III) :

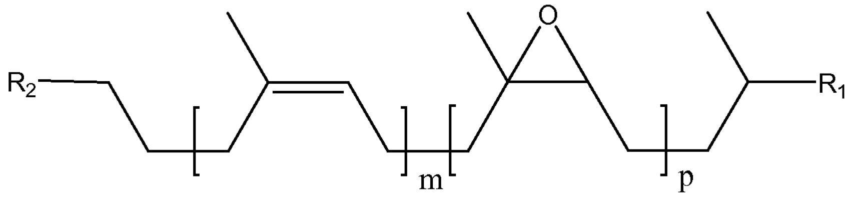

formule (III)

formules dans lesquelles :

- n est un nombre entier compris entre 5 et 100, de préférence entre 8 et 70
- m et p sont des nombres entiers, inférieurs à n, de préférence tels que p<m<n
- $R_1$ est un groupement choisi parmi : OH, alcoxy en $C_1$ à $C_{12}$, de préférence en $C_1$ à $C_8$ (par exemple méthyloxy, éthyloxy ou octyloxy) aryloxy (par exemple phényloxy), acryloyle, -N $R_3R_4$ avec $R_3$ étant H ou un alkyle linéaire en $C_1$-$C_{12}$ et $R_4$ étant H ou un alkyle linéaire en $C_1$-$C_{12}$
- $R_2$ étant un groupement choisi parmi : OH, acryloyle, -N $R_5$ $R_6$ ou -$N^+R_5$ $R_6$ $R_7$ avec $R_5$ et $R_6$ identiques ou différents étant choisis parmi : H, alkyle, hydroxyalkyle, cyanoalkyle et halogénoalkyle en $C_1$ à $C_{12}$, $R_7$ étant un alkyle linéaire en $C_6$ à $C_{15}$,

et d'au moins un agent de réticulation dudit oligoisoprène téléchélique.

L'oligoisoprène selon l'invention se présente avantageusement sous forme liquide à température ambiante, à savoir, comprise de préférence entre 5 et 35°C (ou plage de température d'utilisation possible).

Cet oligoisoprène peut être préparé à partir de caoutchouc naturel ou synthétique, présentant l'avantage de posséder des microstructures modifiables chimiquement de manière contrôlée. Son squelette de base est le cis-1,4-polyisoprène, linéaire, obtenu à partir de composés non toxiques (caoutchouc naturel). Ce cis-1,4-polyisoprène est avantageusement de fonctionnalité égale à 2.

Ainsi, il est apte à être étalé sur un support en une couche de faible épaisseur, et, en présence de l'agent de réticulation, à polymériser sous l'action de rayonnements visibles et/ou ultra violets, en formant un film souple.

Il a été découvert qu'une telle composition présente des propriétés biostatiques, c'est-à-dire inhibant la prolifération des organismes vivants sur ladite surface, ou biocides, à savoir permettant la destruction d'éventuels organismes biologiques en contact avec la surface du support.

L'agent de réticulation est présent en des proportions "catalytiques", c'est à dire dans les proportions allant de préférence jusqu'à 5% en poids de ladite composition.

Selon un premier mode de réalisation de l'invention, en vue d'ajuster la viscosité de la composition selon l'invention et permettre un bon étalement sur le support, cette dernière peut comprendre également un agent diluant réactif photoréticulable, avantageusement dans les mêmes conditions que l'oligoisoprène. Des exemples d'agents diluants sont le TMPO (2-éthyl-2-(hydroxyméthyl) oxétane) et le HDDA (hexane diol diacrylate). Cet agent diluant réactif permet une augmentation substantielle de la réactivité, c'est à dire de la vitesse de polymérisation ce qui diminue le temps et l'énergie nécessaire à la réalisation d'un revêtement. En outre, cet agent diminue fortement la viscosité de la

formulation ce qui facilite son application sur la surface à traiter. Il est présent dans des proportions allant de préférence jusqu'à 40 % en poids de la composition selon l'invention.

Selon un second mode de réalisation de l'invention, la composition ne renferme pas d'agent diluant réactif et consiste exclusivement en l'association d'au moins ledit oligoisoprène téléchélique linéaire de formule (I), (II) ou (III) et d'au moins un agent de réticulation dudit oligoisoprène téléchélique.

Cependant, la composition peut renfermer en outre des constituants "neutres", c'est à dire ne participant pas à la photoréticulation, tels que des colorants, des pigments, des principes actifs, des particules métalliques, des particules magnétiques, des agents de renfort.

La présente invention concerne aussi un film antisalissures, selon les revendications 6 et 7 et caractérisé en ce qu'il est obtenu par application d'une couche mince de la composition liquide telle que décrite ci-dessus, sur un support et réticulé sous l'action de rayonnements visibles et/ou ultraviolets. Ce rayonnement peut être fourni par une lampe à émission continue ou discontinue, émettant à des longueurs d'ondes comprises entre 200nm et 800nm environ.

Les films ainsi obtenus sont transparents ou translucides, pouvant être colorés par adjonction de pigments. Par ailleurs ils peuvent être souples (élastiques) ou rigides en fonction de la quantité et de la nature du diluant utilisé. La rugosité de surface des films peut être contrôlée par la maîtrise de la vitesse de réticulation, notamment au moyen du type de lampe utilisée, en réglant le taux de dilution et la viscosité. En effet plus la vitesse de réticulation est élevée, plus le film formé présente une rugosité importante.

Le film obtenu présente de manière surprenante des propriétés biocides ou biostatiques à l'encontre notamment des bactéries, champignons, microalgues et/ou macroalgues, et ceci quel que soit le degré de rugosité de sa surface. Un tel film peut ainsi revêtir des surfaces destinées à être immergées, telles que des coques de navires.

La présente invention concerne également tout support revêtu d'un film selon la revendication 8 de la présente invention, l'épaisseur totale de ce film étant inférieure au millimètre, et de préférence comprise entre 10 $\mu$m et 500 $\mu$m.

Ainsi le film selon l'invention peut être avantageusement utilisé pour la protection de type antifouling d'un support immergé en eau douce ou marine, notamment des coques de navire, pour inhiber l'apparition d'un biofilm sur des instruments médicaux, cathéters ou implants, sur des parois en contact avec un milieu aqueux ou dans un environnement humide, telles que des surfaces de revêtements de sol, des parois murales, de canalisations, des appareils immergés (notamment des appareils d'optique immergés) ou encore des tours de refroidissement. Cette liste n'étant pas exhaustive.

La présente invention concerne également l'utilisation selon les revendications 9 à 12 de la composition antisalissures décrite ci-dessus, en tant qu'additif dans la préparation de matériaux, en vue de leur conférer des propriétés bactériostatiques et/ou bactéricides ; ou dans le domaine médical, en particulier pour la fabrication d'instruments médicaux, de biomatériaux, de cathéters, de prothèses, d'implants ; ou pour la fabrication de revêtements, de contenants et d'emballages, notamment dans le domaine agro-alimentaire.

La présente invention va être décrite plus en détail et illustrée par les exemples non limitatifs ci-après.

<u>Exemples :</u>

I. Synthèses d'oligoisoprènes photoréticulables

La synthèse des précurseurs photoréticulables se fait en plusieurs étapes. Dans un premier temps, la dégradation contrôlée du cis-1,4-polyisoprène 100 % linéaire, de fonctionnalité égale à 2, donne accès à des oligoisoprènes carbonyltéléchéliques de masse molaire moyenne en nombre et de structure chimique bien définies. Ensuite, plusieurs modifications chimiques sur ces oligomères donnent les différents précurseurs photoréticulables.

Tous les produits synthétisés sont caractérisés par RMN$^1$H, RMN$^{13}$C, IRTF et Chromatographie d'Exclusion Stérique.

<u>Voie n°1 :</u>

I.1. Modifications chimiques du cis-1,4-polyisoprène carbonyltéléchélique (PICT)

1.1.1. <u>Exemples 1 à 4</u> : réduction des extrémités aldéhyde et cétone : synthèse du cis-1,4-polyisoprène hydroxytéléchélique (PIHT) :

Dans un tricol muni d'un réfrigérant et d'une agitation magnétique, le PICT dissous dans du THF (0,07 mol / L) est ajouté goutte à goutte à une solution de borohydrure de sodium ($NaBH_4$) dans le THF (0,3 mol / L). Le mélange réactionnel est ensuite chauffé à 60 °C. Après 6h, on laisse refroidir et on hydrolyse avec 20 g de glace dissous dans 20 mL de THF, versés goutte à goutte à l'aide d'une ampoule à addition. Après un lavage avec une solution saturée de chlorure de sodium (NaCl), la phase organique est séchée avec du $MgSO_4$, filtrée et concentrée à l'évaporateur rotatif.

Le produit obtenu est ensuite séché sous vide.

Les conditions opératoires et les rendements (Rd) obtenus sont présentés dans le tableau 1.

TABLEAU 1

| Exemples | PICT (g) | $NaBH_4$ (g) | T (°C) | T (h) | Rd (%) |
|---|---|---|---|---|---|
| 1 | 10 | 2,18 | 60 | 6 | 98 |
| 2 | 8 | 1,72 | 60 | 6 | 93 |
| 3 | 13 | 2,84 | 60 | 6 | 94 |
| 4 | 7 | 1,53 | 60 | 6 | 97 |

La RMN$^1$H du produit obtenu (PIHT) donne :

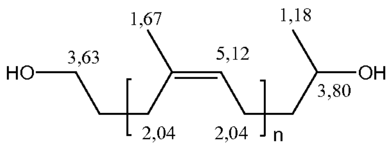

De masse molaire en nombre comprise entre 700 et 5000, n étant compris entre 9 et 65

I.1.2. Exemple 5 : Hydrogénation du PIHT : synthèse du cis-1,4-polyisoprène hydrogéné (PIHTH)

Dans un dispositif d'hydrogénation catalytique, on introduit 2 g de PIHT obtenu selon l'un des exemples 1 à 4, dissous dans 50 mL d'acétate d'éthyle et 500 mg de palladium supporté sur charbon (Pd/C). Le mélange réactionnel est soumis à une agitation mécanique sous pression d'hydrogène (3 bars). La durée et la température de la réaction ont été variées afin d'obtenir des taux d'hydrogénation différents (jusqu'à 83 % environ). Le palladium est ensuite séparé par filtration, la solution est concentrée à l'évaporateur rotatif et le produit final est séché sous vide. Le rendement obtenu est de 75%.

Le produit obtenu est caractérisé par RMN$^1$H :

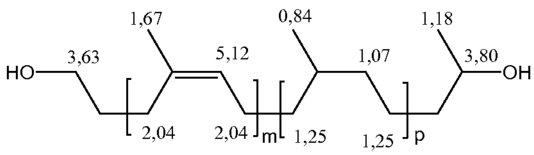

Voie n°2 :

I.1.3. Exemples 6 à 9 : Synthèse du cis-1,4- polyisoprène aminocarbonyltéléchélique à partir du PICT

L'amination réductrice du PICT est réalisée de façon sélective sur la fonction aldéhyde uniquement.

Dans un tricol muni d'une agitation magnétique et d'un réfrigérant et sous atmosphère inerte, on introduit le PICT en solution dans le dichlorométhane (0,03 mol / L) et l'amine (2,1 équivalents). Puis, le triacétoxyborohydrure de sodium ($NaBH(OAc)_3$) (2,1 équivalents) est ajouté à la solution. Après 24 h à température ambiante, le mélange est lavé avec une solution de soude (NaOH, 1N). La phase organique est ensuite séparée, séchée avec du $MgSO_4$ et le solvant évaporé.

Les conditions opératoires et les rendements obtenus sont présentés dans le tableau 2.

TABLEAU 2

| Exemples | PICT (g) | $M_{PICT}$ (g/mol) | Amine (mL) | $NaBH(OAc)_3$ (g) | Rd (%) |
|---|---|---|---|---|---|
| 6 | 8 | 1700 | Diéthyliminodiacétate: 1,73 | 2,72 | 98 |
| 7 | 5,42 | 1700 | Diéthylamine: 0,96 | 1,96 | 80 |
| 8 | 6 | 4500 | Diéthylamine: 0,41 | 0,83 | 90 |

(suite)

| Exemples | PICT (g) | $M_{PICT}$ (g/mol) | Amine (mL) | $NaBH(OAc)_3$ (g) | Rd (%) |
|---|---|---|---|---|---|
| 9 | 12 | 4500 | Diéthanolamine: 0,53 | 1,56 | 85 |

Les produits obtenus sont par exemple :

| Amine utilisée | Produit obtenu |
|---|---|
| 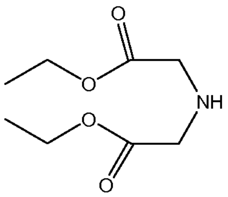 (1) | 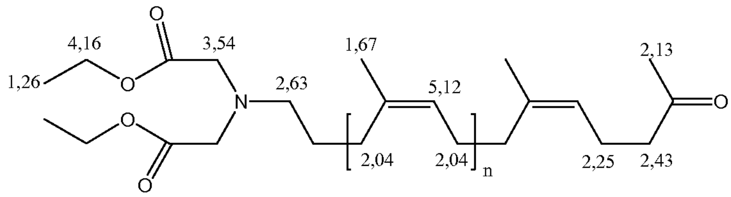 |
| 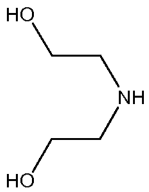 (2) | 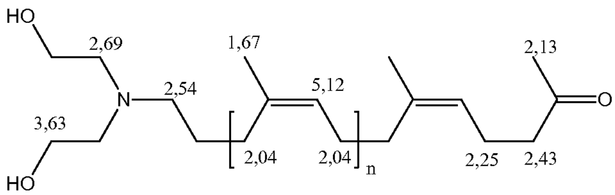 |
| 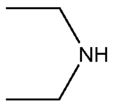 (3) | 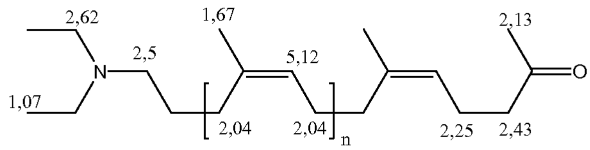 |

I.1.4. Exemples 10 à 13 : Réduction des fonctions carbonyle des oligoisoprènes aminocarbonyltéléchéliques

Dans un tricol sous atmosphère inerte, une solution éthérée d'alumino hydrure de lithium ($LiAlH_4$) à 1 mmol / mL (2 équivalents par mole de polymère) est diluée dans 10 mL d'éther sec. Ensuite, l'oligoisoprène aminocarbonyltéléchélique dissous dans l'éther anhydre (0,01 mol / L) est additionné goutte à goutte. Après 6h sous agitation et à température ambiante, l'excès d'alumino hydrure de lithium est éliminé par hydrolyse et le produit est extrait au dichlorométhane. Enfin, la phase organique est séparée, séchée avec du $MgSO_4$ et le solvant évaporé à l'aide de l'évaporateur rotatif.

Les détails opératoires et les rendements (Rd) obtenus sont regroupés dans le tableau 3.

TABLEAU 3

| Exemples | Oligomère (g) | $M_{oligomère}$ (g/mol) | $LiAlH_4$ (mL) | Rd (%) |
|---|---|---|---|---|
| 10 | Oligomère 3 (4,29) | 1700 | 6,2 | 90 |
| 11 | Oligomère 1 (7,91) | 1700 | 9,1 | 70 |
| 12 | Oligomère 3 (4,41) | 4500 | 2,38 | 88 |
| 13 | Oligomère 2 (5,12) | 4500 | 2,76 | 74 |

On obtient notamment :

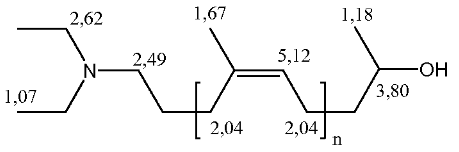

(4)

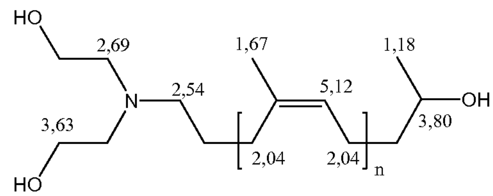

(5)

I.1.5. Exemples 14 et 15 : Synthèse du α-propyl amino, ω-amino dihydroxyéthyle cis-1,4-polyisoprène à partir de l'oligoisoprène (2)

Dans un tricol sous atmosphère inerte et muni d'une agitation magnétique, on introduit l'oligoisoprène (2) dissous dans le dichlorométhane (0,022 mol / L) et la diéthyl aminopropylamine (2,1 équivalents). Ensuite, le triacétoxyborohydrure de sodium (2,1 équivalents) et l'acide acétique glacial (1 équivalent) sont ajoutés. La réaction est poursuivie pendant 24 h à température ambiante. Enfin, le mélange réactionnel est lavé avec une solution de soude (1 N) et la phase organique séparée, séchée sur sulfate de magnésium, filtrée et concentrée à l'évaporateur rotatif.

Les détails opératoires sont présentés dans le tableau 4.

TABLEAU 4

| Exemples | Oligomère 2 (g) | Diéthylamino-propylamine (mL) | $NaBH(OAc)_3$ (g) | Ac. Acétique (mL) | Rd (%) |
|---|---|---|---|---|---|
| 14 | 18 | 1,93 | 3,6 | 0,3 | 80 |
| 15 | 7,28 | 0,77 | 1,44 | 0,12 | 78 |

La RMN$^1$H donne :

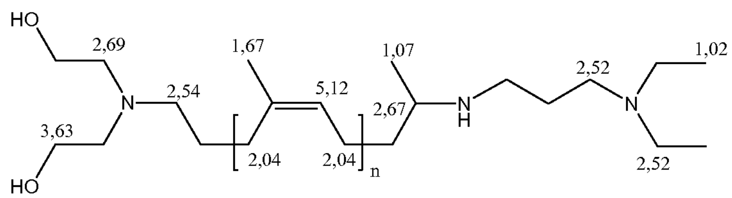

II.2.6. Exemples 16 à 18 : Époxydation partielle des oligoisoprènes téléchéliques

Quel que soit l'oligomère téléchélique à époxyder, le mode opératoire reste le même. La quantité de mCPBA nécessaire est calculée en utilisant l'équation suivante :

$$m_{mCPBA} = (m_{oligomère}) / 68{,}8) * (\tau_e / 100) * n * M_{mCPBA} * (100 / 70)$$

avec

- $\tau_e$: Taux d'époxydation
- (70 / 100): Pureté du mCPBA
- (68,8): Masse molaire d'une unité isoprène
- n: Nombre de motifs isoprène

La réaction est réalisée dans un ballon tricol muni d'une agitation magnétique et placé dans un bain de glace. L'oligomère dissous dans le dichlorométhane (0,09 mol / L) est introduit dans le ballon et laissé sous agitation pendant 30 min pour atteindre une température de 0 °C. La quantité souhaitée d'agent d'époxydation, ici le mCPBA (méta chloro perbenzoïc acid) (selon le taux d'époxydation visé) en solution dans 20 mL de $CH_2Cl_2$ est ensuite additionnée goutte à goutte à la solution d'oligomères (voir détails dans le tableau 5). Après l'addition, le mélange réactionnel est agité pendant 3 h à température ambiante, puis lavé avec une solution saturée d'hydrogénocarbonate de sodium. Enfin, la phase

organique est séchée sur $MgSO_4$, filtrée et concentrée. Le produit concentré est séché sous vide pendant 24 h.

Concernant les oligoisoprènes aminotéléchéliques, un lavage avec de la soude 5 N est réalisé après la réaction afin de régénérer l'amine. En effet, au cours de la réaction, il y a protonation de l'amine tertiaire.

TABLEAU 5

| Exemples | Oligomère (g) | $M_{oligomère}$ (g/mol) | mCPBA (g) | $T_e$ (%) | Rd (%) |
|---|---|---|---|---|---|
| 16 | PIHT (4,35) | 1700 | 1,46 | 10 | 95 |
| 17 | PIHT (5) | 4500 | 1,73 | 10 | 92 |
| 18 | Oligomère 4 (5) | 1700 | 1,73 | 10 | 89 |

La RMN[1]H donne :

| Produit de départ | Produit obtenu |
|---|---|
| PIHT | 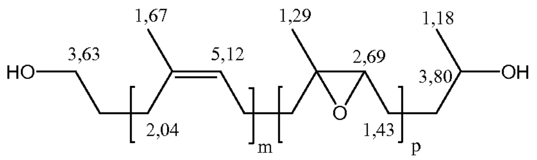 (PIHTE) |
| PIHTH | 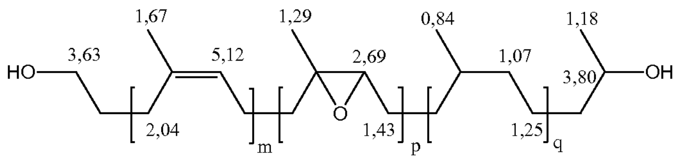 (PIHTHE) |
| oligomère 4 | 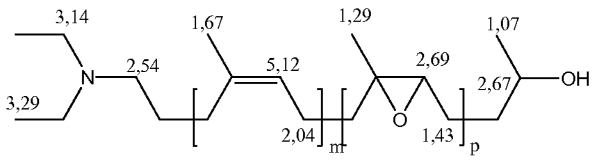 (6) |
| Oligomère 5 | 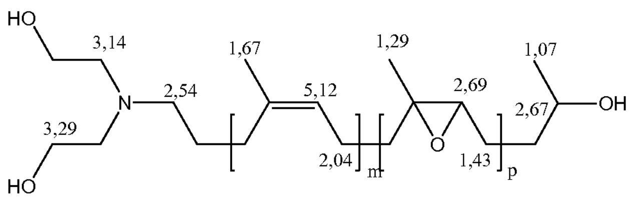 (7) |

II.2.7. <u>Exemples 19 à 22</u> : Fixation de fonctions acrylate en extrémités de chaîne

Dans un ballon tricol placé dans un bain à 0 °C et sous circulation d'argon est introduit l'oligomère en solution dans le dichlorométhane anhydre (0,08 mol / L). Ensuite, on additionne la triéthylamine (2,3 équivalents, sauf pour l'oligomère 5 (3,5 équivalents)), puis le chlorure d'acryloyle (2,3 équivalents, sauf pour l'oligomère 5 (3,5 équivalents)) est additionné goutte à goutte (voir détails dans le tableau 6). Le mélange est laissé sous agitation et à température ambiante pendant 24 h. En fin de réaction, un lavage avec une solution de soude 1 N est effectué, puis la phase organique est séchée sur sulfate de magnésium, filtrée et concentrée. Le produit est séché sous vide pendant 24 h.

TABLEAU 6

| Exemples | Oligomère (g) | Chlorure d'acryloyle (mL) | Triéthylamine (mL) | Rd (%) |
|---|---|---|---|---|
| 19 | PIHT (7,25) | 0,88 | 1,5 | 92 |

(suite)

| Exemples | Oligomère (g) | Chlorure d'acryloyle (mL) | Triéthylamine (mL) | Rd (%) |
|---|---|---|---|---|
| 20 | Oligomère 4 (3,86) | 0,45 | 0,77 | 88 |
| 21 | Oligomère 5 (5,52) | 0,96 | 1,65 | 85 |
| 22 | Oligomère 6 (3,20) | 0,34 | 0,59 | 85 |

RMN$^1$H

| Produit de départ | Produit obtenu |
|---|---|
| PIHT | 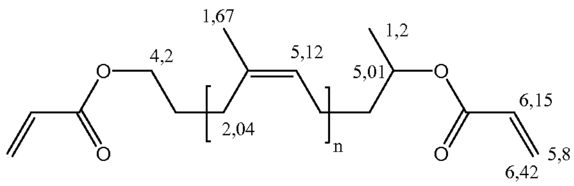 (8) |
| PIHTH | 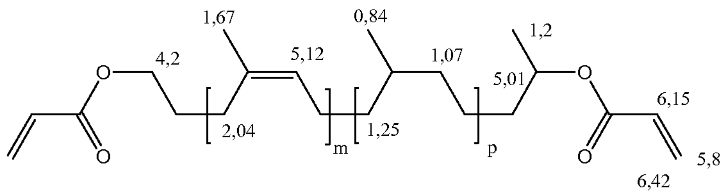 (9) |
| PIHTE | 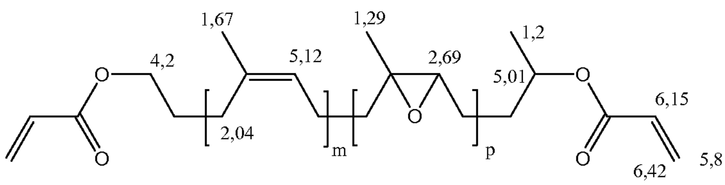 (10) |
| Oligomère 4 | 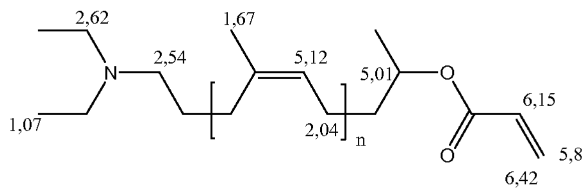 (11) |
| Oligomère 5 | 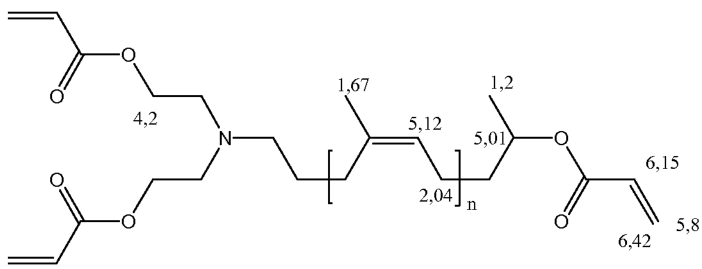 (12) |

Oligomère 6 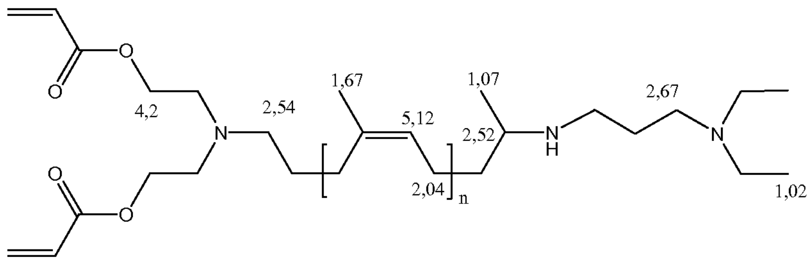

(13)

I.1.8. Exemples 23 à 25 : Quaternisation des fonctions amine des oligoisoprènes aminotéléchéliques

Dans un tricol placé dans un bain chauffant, on introduit l'oligomère à traiter (voir tableau 7) dissous dans un mélange de solvant dichlorométhane / acétonitrile (3/1) (0,02 mol / L). Ensuite, L'halogénure d'alkyle est ajouté (5 équivalents / fonction amine) et le mélange réactionnel est chauffé à 40°C dans le cas d'iodure d'octyle et à 65°C dans le cas du bromure d'octyle. Après 24 h, les solvants sont évaporés à l'évaporateur rotatif et l'excès d'halogénure d'alkyle éliminé par évaporation sous vide poussé.

TABLEAU 7

| Exemples | Oligomère (g) | Iodooctane (mL) | Rd (%) |
|---|---|---|---|
| 23 | Oligomère 6 (4,2) | 0,8 | 100 |
| 24 | Oligomère 11 (2,3) | 0,55 | 100 |
| 25 | Oligomère 13 (10) | 6,2 | 100 |

La RMN$^1$H donne :

- Quaternisation de 6

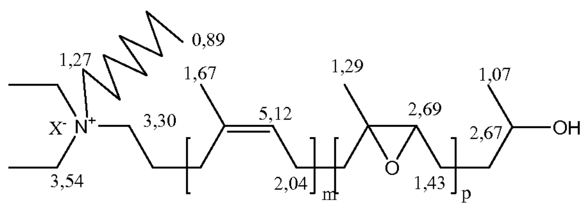

(14)

- Quaternisation de 11

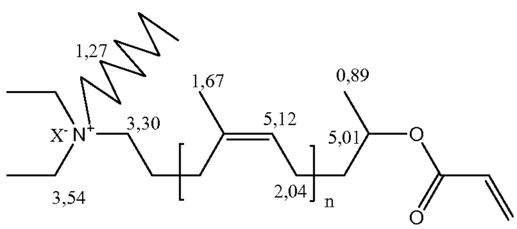

(15)

- Quaternisation de 13

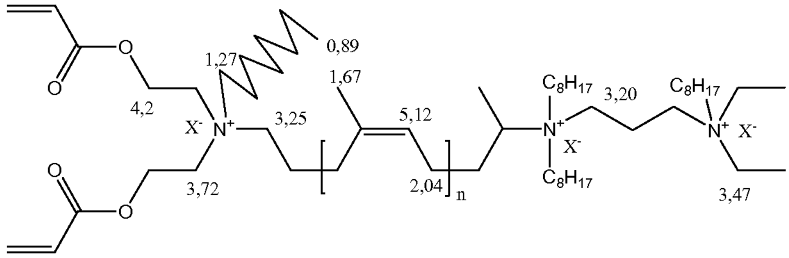

(16)

II. Exemple 26 : Préparation des revêtements par photoréticulation

Les différents revêtements sont préparés soit en utilisant uniquement l'un des précurseurs décrits précédemment, soit en présence de diluants réactifs. Des exemples de quelques formulations sont décrits dans le tableau 8 ci-après.

TABLEAU 8

| Formulation N° | Précurseur | Photoamorceur (%)* | Diluant (%)** | Mode de photoréticulation |
|---|---|---|---|---|
| 1 | PIHTE | Dégacure KI85 5% | - | Cationique |
| 2 | PIHTE | Dégacure KI85 5% | TMPO 30% | Cationique |
| 3 | PIHTE + oligomère 14 (50/50) | Dégacure KI85 5% | - | Cationique |
| 4 | Oligomère 8 | Darocur 1173 3% | - | Radicalaire |
| 5 | Oligomères (8+15) (50/50) | Darocur 1173 3% | - | Radicalaire |
| 6 | Oligomères (8+15) (75/25) | Darocur 1173 3% | - | Radicalaire |
| 7 | Oligomères (8+14) (50/50) | Darocur 1173 3% | - | Radicalaire |
| 8 | Oligomère 9 | Darocur 1173 3% | HDDA 30% | Radicalaire |

* Pourcentage massique par rapport à la masse du précurseur ou précurseur + diluant
** Pourcentage massique par rapport à la masse totale du mélange

Les photoamorceurs et diluants utilisés dans cet exemple sont présentés ci-après :

Dégacure KI85

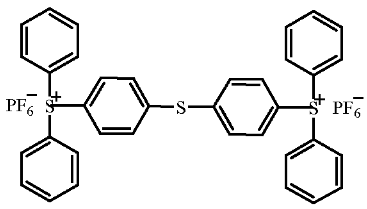

TMPO

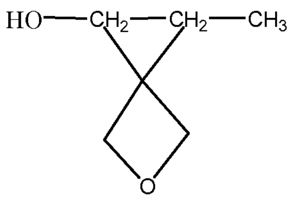

Darocur1173

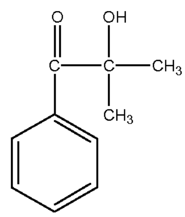

HDDA

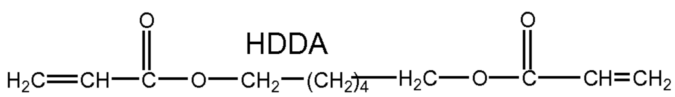

Les formulations sont étalées sur le support à l'aide de barres de Conway, ce qui permet de contrôler l'épaisseur des revêtements pouvant aller de 10 µm à 500 µm. Les intensités d'irradiation sont de 50 et 13 mW/cm$^2$ respectivement pour la polymérisation cationique et radicalaire.

Dans les conditions décrites ci-dessus, les revêtements obtenus par voie radicalaire ont des rugosités comprises entre 15 et 20 Å et ceux obtenus par voie cationique présentent une rugosité plus importante (entre 40 et 45 Å).

Les supports aussi variés que le verre, le métal ou les plexiglass ont été testés.

L'adhésion sur ces différentes surfaces était excellente, au contraire des essais comparatifs effectués avec des films à base de polyuréthane, qui gonflaient en milieu aqueux et se décollaient des supports.

Tests évaluant les propriétés antifouling

Les formulations 1 à 8 ci-dessus ont été testées vis-à-vis d'organismes marins indicateurs du biofouling et couramment utilisées pour les tests en laboratoire : des bactéries, des champignons, des microalgues et des macroalgues. Chaque test biologique a été réalisé au moins six fois afin de s'assurer de la répétabilité des résultats.

Mise en contact des revêtements avec des bactéries

Les bactéries marines sélectionnées pour ce travail (*Pseudoalteromonas elyakovii Shewanella putrefaciens, Cobetia marina, Polaribacter irgensii et Vibrio aestuarianus*) sont reconnues comme composantes majeures des biofilms marins. L'évaluation de l'activité antimicrobienne potentielle des formulations a été réalisée par la méthode classique des microplaques. Les bactéries ont été cultivées sur du milieu MHB (Mueller Hinton Broth, SIGMA) enrichi de NaCl (15 g/l). Les films, découpés à l'aide d'un emporte pièce, ont été déposés dans les puits d'une microplaque (Fisher, 96 puits). L'ensemencement des microplaques a ensuite été réalisée : 100 $\mu$L d'une suspension bactérienne contenant $2.10^8$ cellules/mL ont été déposées dans chaque puits de façon stérile. Après incubation (48 h à 30 °C), l'activité antimicrobienne a été observée par comparaison de la croissance bactérienne entre les formulations et le contrôle (C).

Lors de la première série de criblage, trois souches de bactéries ont été choisies (*Pseudoalteromonas elyakovii, Shewanella putrefaciens, Cobetia marina*). Les résultats présentés dans le tableau 9 (première série de tests) montrent, en comparaison avec le contrôle, que les formulations 1-3 et 5-7 permettent une inhibition de la croissance des trois souches testées. Les formulations 4 et 8 présentent des propriétés antibactériennes vis-à-vis de deux des trois souches sélectionnées. Ceci démontre clairement le caractère antibactérien des films de la présente invention.

TABLEAU 9

| | 1 | 2 | 3 | 4 | 5 | 6 | 7 | 8 | C |
|---|---|---|---|---|---|---|---|---|---|
| *Pseudoalteromona s elyakovii* | + | + | + | - | + | + | + | + | - |
| *Shewanella putrefaciens* | + | + | + | + | + | + | + | - | - |
| *Cobetia marina* | + | + | + | + | + | + | + | + | - |

Une deuxième série de tests a été réalisée mettant en présence les bactéries présentées dans le tableau 10 vis-à-vis des films de formulation 1, 4 et 7 et le contrôle.

Une partie des films 4 et 7 a été préalablement soumis à une "extraction" c'est-à-dire un lavage au dichlorométhane à reflux à 40 °C pendant 24 heures en vue d'éliminer les précurseurs éventuellement restants sur lesdits films. Les résultats obtenus sont présentés dans le tableau 10.

TABLEAU 10

| | 1 | 4 | 4 (extraction) | 7 | 7 (extraction) | C |
|---|---|---|---|---|---|---|
| *Pseudoalteromona s elyakovii* | + | + | + | + | + | - |
| *Shewanella putrefaciens* | + | + | + | + | + | - |
| *Cobetia marina* | + | + | + | + | + | - |
| *Polaribacter irgensii* | + | + | + | + | + | - |
| *Vibrio aestuarianus* | + | + | + | + | + | - |

Légende des tableaux 9 et 10

Fi : n°film

C : contrôle (surface de référence : polystyrène)

(+) : présence d'un halo d'inhibition, zone où les bactéries ne croissent pas sur ou au dessous du film

(-) : les bactéries poussent sur ou/et au dessous des films

Aucune différence d'efficacité n'a été observée entre les films 4 et 7 soumis à l'extraction ou non. L'action "antibactérienne" n'est donc pas due à la présence éventuelle de résidus.

Mise en contact des films avec des microalgues

Les algues phytoplanctoniques sélectionnées *(Amphora coffeaeformis, Cylindrotheca closterium, Pleurochrysis roscoffensis Chlorarachnion globosum Navicula jeffreyi et Exanthemachrysis Gayraliae*) ont été choisies pour leur importance dans les phénomènes de biofouling en milieu marin et pour leur capacité à former des EPS (exopolysaccharides jouant un rôle crucial dans la fixation permanente des biofilms). L'inhibition de leur fixation et croissance est donc un enjeu majeur pour le développement de nouvelles solutions antifouling.

L'évaluation du potentiel antimicroalgues des différents films 1 à 8 a été réalisée par la méthode des microplaques. Les souches sont cultivées sur du milieu F/2. Les films découpés à l'aide d'un emporte-pièce, ont été déposés dans les puits d'une microplaque (Fisher, 96 puits). L'ensemencement des microplaques a ensuite été réalisé : 100 μl d'une suspension algale contenant 1 μg/mL de chlorophylle ont été déposés dans chaque puits de façon stérile. Après incubation (5 jours à 25 °C), l'activité antimicroalgues a été observée par microscopie optique, le comptage des microalgues adhérées étant effectué sur trente champs optiques différents. La moyenne des algues fixées par unité de surface est ensuite déterminée.

Le tableau 11 ci-après présente le pourcentage (%) des cellules adhérées sur les films par rapport au nombre de cellules adhérées sur la surface de référence (C).

TABLEAU 11

| Film | 1 | 2 | 3 | 4 | 5 | 6 | 7 | 8 | C |
|---|---|---|---|---|---|---|---|---|---|
| *Amphora coffeaeformis* | 4 | 6,3 | 2,36 | 2,1 | 1,1 | 1,2 | 1 | 4,2 | 100 |
| *Cylindrotheca closterium* | 3 | 4,6 | 2,75 | 2,3 | 1,07 | 0,76 | 0,95 | 3,76 | 100 |
| *Pleurochrysis* | 4,2 | 4,5 | 1,44 | 1,85 | 1 | 0,87 | 0,7 | 4 | 100 |
| *roscoffensis* | 5 | | | | | | | | |
| *Chlorarachnion globosum* | 3,1 | 3,5 | 1,7 | 1 | 1,05 | 1,2 | 2,9 | 2,6 | 100 |
| *Navicula jeffreyi* | 1,8 | 3 | 1,7 | 1,83 | 1,3 | 1,22 | 0,9 | 2 | 100 |
| *Exanthemachrysis Gayraliae* | 1,3 | 2 | 1,1 | 1,4 | 0,75 | 1,2 | 1 | 1,6 | 100 |

Mise en contact des revêtements avec des macroalgues

L'algue utilisée est *Ulva intestinalis,* c'est une algue verte opportuniste et l'une des espèces les plus impliquées dans le fouling marin. Elle a été récoltée le jour même des tests sur la côte de Portsmouth (Grande-Bretagne).

Les parties fertiles (en sporulation) de l'algue sont sélectionnées et mises dans du milieu Von Stosch. Après quelques minutes, les spores sont libérées dans le milieu, leur présence est contrôlée par observation au microscope optique.

Les échantillons de films polymère sont découpés en petits ronds comme précédemment et sont placés dans une microplaque de 96 puits. Ensuite, 100 μL du milieu contenant 25000 spores sont injectés dans chaque puits (concentration de 250000 spores / mL). Des puits vides sont utilisés comme références (C) et six réplicats sont réalisés par échantillon. Les plaques sont placées deux heures à l'obscurité pour permettre la fixation des spores.

Après deux heures, les puits sont vidés et rincés avec la solution Von Stosch pour éliminer les spores non fixées, puis, 100 μL du milieu sont additionnés. Les plaques sont placées dans un incubateur à 15 °C, sous un éclairement de 45 μmoles photons $m^{-2}s^{-1}$ (photopériode : 16 heures de lumière / 8 heures d'obscurité) pendant une semaine.

Les observations sont réalisées par microscopie optique. Des comptages des spores fixées, ainsi que celles qui ont germées sont effectués sur trente champs optiques différents. Des moyennes de spores fixées / ou germées par unité de surface sont ensuite déterminées et présentées dans le tableau 12.

<u>*Ulva intestinalis*</u>

TABLEAU 12

| Film | 1 | 4 | 4 (extraction) | 7 | 7 (extraction) | C |
|---|---|---|---|---|---|---|
| Spores adhérées / $cm^2$ | 3120 | 35 | 59 | 21 | 32 | 11800 |
| Pourcentage / Témoin | 27% | 0,3% | 0,5% | 0,17% | 0,27% | 100% |
| Spores germées | 1090 | 0 | 0 | 0 | 0 | 9500 |
| % spores germées par rapport aux spores fixées | 35% | 0% | 0% | 0% | 0% | 85% |

En inhibant quasi-totalement l'adhésion des spores, et leur germination, les films 4 et 7 se révèlent d'excellents antialgues, vis-à-vis de *Ulva intestinalis*.

L'adhésion et la croissance de cette algue est également fortement inhibée sur le film n° 1.

<u>Mise en contact des revêtements avec des champignons</u>

L'activité antifongique des films a été testée, en utilisant la méthode décrite par Hellio et al. (2000, Appl. Microbiology and Biotechnology, 54, 543-549), vis-à-vis de cinq souches de champignons marins de la collection de cultures de l'Université de Portsmouth (School of Biological Sciences - Grande-Bretagne).

*Halosphaeriopsis mediosetigera*

*Asteromyces cruciatus*

*Lulworthia uniseptata*

*Zalerion sp*

*Monodictys pelagica*

Les souches de champignons ont été cultivées sur agar de maïs incliné. Chaque échantillon de film souple a été incorporé dans 200 µL d'agar de maïs à 12 %, pH6 (Sigma). La plaque de test a été inoculée en milieu stérile au centre avec une pastille de 2 mm de diamètre d'agar contenant du mycélium. Tous les tests ont été effectués en double. Après incubation à 25 °C pendant quatre semaines, l'activité a été évaluée en observant la croissance des colonies de champignons. Les résultats sont présentés dans le tableau 13.

TABLEAU 13

| | 1 | 4 | 4 (extraction) | 7 | 7 (extraction) | C |
|---|---|---|---|---|---|---|
| *Halosphaeriopsis mediosetigera* | - | + | + | + | + | - |
| *Asteromyces cruciatus* | - | + | + | + | + | - |
| *Lulworthia uniseptata* | - | + | + | + | + | - |
| *Zalerion sp* | - | + | + | + | + | - |
| *Monodictys pelagica* | - | + | + | + | + | - |
| - = croissance normale = pas de différences avec le témoin<br>+ = inhibition de la croissance | | | | | | |

Les films 4 et 7 se révèlent également d'excellents antifongiques.

## Revendications

**1.** Composition antisalissures, photoréticulable **caractérisée en ce qu'**elle comprend l'association d'au moins un oligoisoprène téléchélique de formule générale (I) :

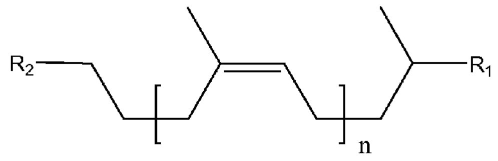

formule (I)

ou un tel oligoisoprène (I) partiellement hydrogéné, de formule (II) :

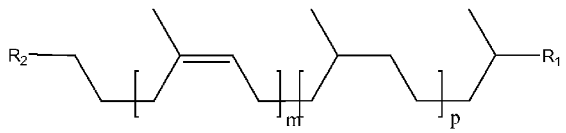

formule (II)

ou d'un composé de formule (I) partiellement époxydé, de formule (III) :

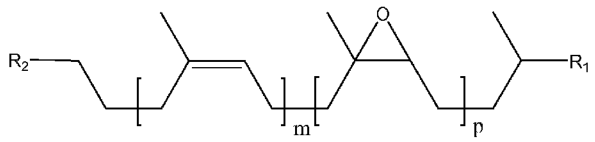

formule (III)

formules dans lesquelles :

- n est un nombre entier compris entre 5 et 100, de préférence entre 8 et 70,
- m et p sont des nombres entiers, inférieurs à n, de préférence tels que p<m<n,
- $R_1$ est un groupement choisi parmi : OH, alcoxy en $C_1$ à $C_{12}$, aryloxy, acryloyle, -N $R_3R_4$ avec $R_3$ étant H ou un alkyle linéaire en $C_1$-$C_{12}$ et $R_4$ étant H ou un alkyle linéaire en $C_1$-$C_{12}$,
- $R_2$ étant un groupement choisi parmi : OH, acryloyle, -N $R_5$ $R_6$ ou -$N^+R_5$ $R_6$ $R_7$, avec $R_5$ et $R_6$ identiques ou différents étant choisis parmi : H, alkyle, hydroxyalkyle, cyanoalkyle et halogénoalkyle en $C_1$ à $C_{12}$, $R_7$ étant un alkyle linéaire en $C_6$ à $C_{15}$,
- et d'au moins un agent de réticulation dudit oligoisoprène téléchélique.

**2.** Composition selon la revendication 1, **caractérisée en ce que** l'oligoisoprène est sous forme liquide à température comprise entre 5 et 35 °C.

**3.** Composition selon la revendication 1 ou 2, **caractérisée en ce qu'**elle comprend également un agent diluant réactif photoréticulable.

**4.** Composition selon la revendication 1, **caractérisée en ce qu'**elle consiste exclusivement en l'association d'au moins ledit oligoisoprène téléchélique de formule (I), (II) ou (III) et d'au moins un agent de réticulation dudit oligoisoprène téléchélique.

**5.** Composition selon les revendications 1 à 3, **caractérisée en ce qu'**elle renferme en outre des constituants ne participant pas à la photoréticulation, tels que des colorants, des pigments, des principes actifs, des particules métalliques, des particules magnétiques, des agents de renfort.

6. Film antisalissures, **caractérisé en ce qu'**il est obtenu par application d'une couche mince d'une composition liquide selon l'une quelconque des revendications précédentes 1 à 5 sur un support et réticulé sous l'action des rayonnements visibles et/ou ultraviolets.

7. Film selon la revendication 6 en tant qu'agent biocide ou biostatique à l'encontre des bactéries, champignons, microalgues et/ou macroalgues.

8. Support revêtu d'un film selon l'une quelconque des revendications 6 ou 7, **caractérisé en ce que** l'épaisseur totale du film est comprise entre 10 µm et 500 µm environ.

9. Utilisation du film antisalissures selon les revendications 6 ou 7, ou du revêtement selon la revendication 8, pour la protection de type antifouling d'un support immergé en eau douce ou marine, pour inhiber l'apparition d'un biofilm sur des instruments médicaux, cathéters ou implants, sur des parois en contact avec un milieu aqueux ou dans un environnement humide.

10. Utilisation d'une composition selon l'une quelconque des revendications 1 à 5, en tant qu'additif dans la préparation de matériaux, en vue de leur conférer des propriétés bactériostatiques et/ou bactéricides.

11. Utilisation selon la revendication 10, dans le domaine médical.

12. Utilisation selon la revendication 10, pour la fabrication de revêtements, de contenants et d'emballages.

## Patentansprüche

1. Photovernetzbare Antifouling-Zusammensetzung, **dadurch gekennzeichnet, dass** sie die Vereinigung von mindestens einem telechelen Oligoisopren der allgemeinen Formel (I):

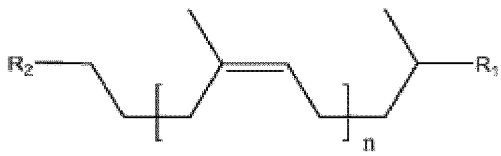

Formel (I)

oder ein solches Oligoisopren (I), teilweise hydriert, der Formel (II):

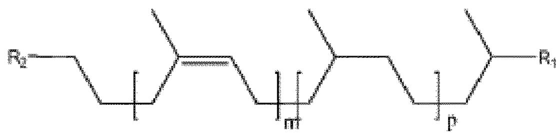

Formel (II)

oder einer Verbindung der Formel (I), teilweise epoxidiert, der Formel (III):

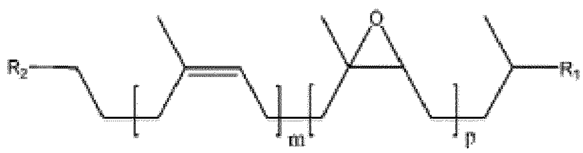

Formel (III)

umfasst, wobei in den Formeln:

- n eine Ganzzahl zwischen 5 und 100, bevorzugt zwischen 8 und 70 ist,
- m und p Ganzzahlen kleiner n sind, bevorzugt so, dass p<m<n,
- $R_1$ ein Rest ist, ausgewählt aus: OH, Alkoxy mit $C_1$ bis $C_{12}$, Aryloxy, Akryloyl,-$NR_3R_4$, wobei $R_3$ H oder ein geradkettiges Alkyl mit $C_1$-$C_{12}$ ist und $R_4$ H oder ein geradkettiges Alkyl mit $C_1$-$C_{12}$ ist,
- $R_2$ ein Rest ist, ausgewählt aus: OH, Akryloyl, -$NR_5R_6$ oder -$N^+R_5R_6R_7$, wobei $R_5$ und $R_6$ identisch oder verschieden sind, ausgewählt aus: H, Alkyl, Hydroxyalkyl, Cyanoalkyl und Halogenoalkyl mit $C_1$ bis $C_{12}$, wobei $R_7$ ein geradkettiges Alkyl mit $C_6$ bis $C_{15}$ ist,
- und von mindestens einem Vernetzungsmittel des besagten telechelen Oligoisoprens.

2. Zusammensetzung nach Anspruch **1, dadurch gekennzeichnet, dass** das Oligoisopren bei einer Temperatur zwischen 5 und 35 °C in flüssiger Form vorliegt.

3. Zusammensetzung nach Anspruch **1** oder **2, dadurch gekennzeichnet, dass** sie ebenfalls ein photovernetzbares reaktives Verdünnungsmittel umfasst.

4. Zusammensetzung nach Anspruch **1, dadurch gekennzeichnet, dass** sie ausschließlich aus der Vereinigung von mindestens dem besagten telechelen Oligoisopren der Formel (I), (II) oder (III) und von mindestens einem Vernetzungsmittel des besagten telechelen Oligoisoprens besteht.

5. Zusammensetzung nach den Ansprüchen **1** bis **3, dadurch gekennzeichnet, dass** sie des Weiteren Bestandteile einschließt, die nicht an der Photovernetzung teilnehmen, wie Farbstoffe, Pigmente, Wirkstoffe, Metallpartikel, magnetische Partikel, Verstärkungsmittel.

6. Antifouling-Film, **dadurch gekennzeichnet, dass** er durch Auftragen einer dünnen Schicht einer flüssigen Zusammensetzung nach einem der vorstehenden Ansprüche **1** bis **5** auf einen Träger hergestellt und unter der Wirkung der sichtbaren und/oder ultravioletten Strahlen vernetzt wird.

7. Film nach Anspruch **6** als biozides oder biostatisches Mittel gegen Bakterien, Pilze, Mikroalgen und/oder Makroalgen.

8. Träger, der mit einem Film nach einem der Ansprüche **6** oder **7** beschichtet ist, **dadurch gekennzeichnet, dass** die Gesamtdicke des Films zwischen etwa 10 $\mu$m und 500 $\mu$m liegt.

9. Verwendung des Antifouling-Films nach den Ansprüchen **6** oder **7,** oder der Beschichtung nach Anspruch **8,** für den Schutz vom Typ Antifouling von einem Träger, der in Süß- oder Meerwasser getaucht ist, für das Hemmen der Entstehung eines Biofilms auf medizinischen Instrumenten, Kathetern oder Implantaten, auf Wänden in Kontakt mit einem wässrigen Milieu oder in einer feuchten Umgebung.

10. Verwendung einer Zusammensetzung nach einem der Ansprüche **1** bis **5** als Zusatz in der Herstellung von Materialien, um ihnen bakteriostatische und/oder bakterizide Eigenschaften zu verleihen.

11. Verwendung nach Anspruch **10,** im medizinischen Bereich.

12. Verwendung nach Anspruch **10,** für die Fertigung von Beschichtungen, Behältnissen und Verpackungen.

## Claims

1. A photo-cross-linkable antifouling composition, **characterized in that** it comprises the combination of at least one telechelic oligoisoprene of general formula (I):

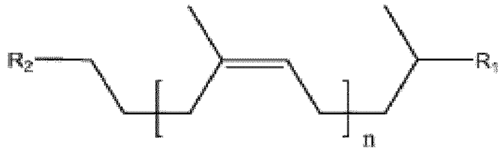

formula (I)

or such oligoisoprene (I) partially hydrogenated, of formula (II):

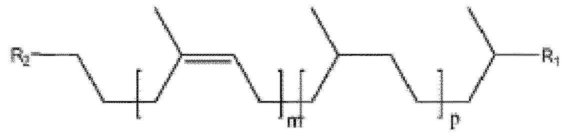

formula (II)

or a compound of formula (I) partially epoxidized, of formula (III):

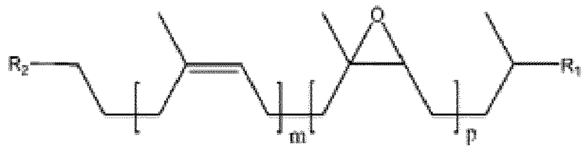

formula (III)

formulas in which:

- n is an integer between 5 and 100, preferably between 8 and 70,
- m and p are integers, lower than n, preferably such that p <m <n,
- $R_1$ is a group selected from: OH, alkoxy in $C_1$ to $C_{12}$, aryloxy, acryloyl, $-NR_3R_4$, with $R_3$ being H or a linear alkyl in $C_1$-$C_{12}$ and $R_4$ being H or a linear alkyl in $C_1$-$C_{12}$,
- $R_2$ being a group selected from: OH, acryloyl, $-NR_5R_6$ or $-N^+R_5R_6R_7$, with $R_5$ and $R_6$ being identical or different selected from: H, alkyl, hydroxyalkyl, cyanoalkyl and haloalkyl in $C_1$ to $C_{12}$, $R_7$ being a linear alkyl in $C_6$-$C_{15}$,
- and at least one crosslinking agent of said telechelic oligoisoprene.

**2.** The composition according to claim **1, characterized in that** the oligoisoprene is in liquid form at a temperature between 5 and 35°C.

**3.** The composition according to claim **1** or **2, characterized in that** it also comprises a reactive diluent photocrosslinkable agent.

**4.** The composition according to claim **1, characterized in that** it consists exclusively of the combination of at least said telechelic oligoisoprene of formula (I), (II) or (III) and at least one crosslinking agent of said oligoisoprene telechelic.

**5.** The composition according to claims **1** to **3, characterized in that** it further contains components not participating in the photo-crosslinking, such as dyes, pigments, active principles, metal particles, magnetic particles, reinforcement agents.

**6.** An antifouling film, **characterized in that** it is obtained by applying a thin layer of a liquid composition according to anyone of the previous claims **1** to **5** on a support and crosslinked under the action of visible radiations and/or ultraviolet radiations.

**7.** The film according to claim **6** as a biocidal or biostatic agent against bacteria, fungi, microalgae and/or macroalgae.

**8.** A support coated with the film according to anyone of claims **6** or **7, characterized in that** the total film thickness is between about 10 μm and 500 μm.

**9.** Use of the antifouling film according to claims **6** or **7,** or the coating according to claim **8,** for the antifouling type protection of a support immersed in freshwater or seawater, to inhibit the appearance of a biofilm on medical instruments, catheters or implants, on walls in contact with an aqueous medium or in a humid environment.

**10.** Use of the composition according to anyone of claims **1** to **5,** as an additive in the preparation of materials in order

to impart bacteriostatic and/or bactericidal properties to them.

11. The use according to claim **10,** in the medical field.

12. The use according to claim **10** for the manufacture of coatings, containers and packagings.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5171760 A
- US 5948863 A
- US 4977220 A
- US 5576388 A


### Littérature non-brevet citée dans la description


- **HELLIO et al.** *Appl. Microbiology and Biotechnology,* 2000, vol. 54, 543-549